## Europäisches Patentamt

## European Patent Office

## Office européen des brevets

(11) Publication number: **0 116 105**

**A1**

(12) **EUROPEAN PATENT APPLICATION**

(21) Application number: **83101343.8**

(22) Date of filing: **11.02.83**

(51) Int. Cl.³: **H 02 H 3/33**

(43) Date of publication of application:
**22.08.84 Bulletin 84/34**

(84) Designated Contracting States:
**AT BE CH DE GB IT LI LU NL SE**

(71) Applicant: **CLAUDE SA**
**27-29, rue de Sèvres**
**F-92103 Boulogne Billancourt(FR)**

(72) Inventor: **Huvet, Jean-Marie**
**27, Grande Rue Ecueil**
**F-51500 Rilly-La-Montagne(FR)**

(72) Inventor: **Serrie, Gérard**
**Résidence Les Tuileries 1B, rue Gustave Laurent**
**F-51100 Reims(FR)**

(74) Representative: **Reinländer & Bernhardt Patentanwälte**
**Orthstrasse 12**
**D-8000 München 60(DE)**

(54) **Domestic power line breaker.**

(57) Domestic power line breaker including a relay which contacts, in series with both conductors of the power line between the load and the a.c. power supply, are open when the control coil of said relay is not energized, the input signal of said breaker being delivered by the secondary windings of a differential transformer detecting any differential current in said line and being located on said power line between said contacts and said a.c. supply, said breaker being characterized in that it includes a current-to-voltage converter (5), a low-pass filter (6), a rectifier (7), a function generator (8), a comparator (9) and an amplifier (10), said input signal being applied to said current-to-voltage converter (5), the output of which is connected to said low-pass filter (6) in series connection with said rectifier (7) the output of which is connected to said function generator (8) generating a voltage signal which is applied to the first input of said comparator (9) having a second input to which is applied a determined d.c. threshold voltage, the output signal of said comparator (9) being applied to the input of said amplifier (10) controlling the state of said relay contacts (3), the circuits of said breaker being supplied by a d.c. voltage source (12) connected to said power line (1) between said relay (3) and said a.c. power supply (2) through a restrike switch (13).

FIG.1

The invention relates to automatic domestic power line breakers which are designed in order to switch off the relay contacts in series in the power line without delay if the detected differential current is high and with a determined delay if it is low in order to avoid inopportune opening of the contacts and a good human protection.

It is known that a flow of an alternative current (50 or 60 Hz) through an human body may have many consequences from pricklings to heart ventricle fibrillations according to the intensity of the current, the time lapse of the flow, and the path of the current flow through the body.

For instance, there is no cardiac danger for a man in good health to be traversed by a 30 mA current during 10 seconds or by a 500 mA current during less than 20 ms. But a physiological tetanus defines another current threshold above which it is not possible to release a hold; this last threshold has an average value of about 10 mA, but it depends upon the characteristics of each person and, more particularly, upon the sex and upon the age. For instance this threshold may decrease to 6 mA for women and less for babies, as disclosed by Dr. J. CABANES in a paper in French language published by the Revue Générale d'Electricité and intitled "Nature des Effets Physiologiques du Courant Electrique" (RGE-FRA, ISSN 0035-3116, 10/81 N°10 pp 707-711).

An automatic power line breaker is used, in every domestic homes, located on the power distribution board in order to disconnect the supply line when a 500 mA defect current is detected, but it requires a ground connection having a very low resistor. If the ground resistor is not very low, a line breaker switching off the power line for a 1 mA defect current is connected. But in this case, noise and transient currents being similar to defect currents, it is necessary that the line breaker distinguishes them in order to avoid inopportune opening of the relay contacts.

Every domestic power line breaker includes a differential transformer connected between the load and the a.c. supply on the power line and a relay which contacts are in series in the line also in upstream part of the load. When a defect current occurs in the line, a signal is generated in the secondary winding of the differential transformer. This signal is used to control the state of the relay after processing. In order to have a response curve depending upon the duration of the defect current and upon its intensity, it is known to apply this signal to a series connection of $n$ amplifiers, the output of each one being connected to a delay circuit generating a pulse; all the pulses are then applied to a comparator in order to control the state of the relay if one of these pulses is higher than a determined threshold. The response curve of such breaker is of staircase type and is not similar to the known danger curve. Moreover, this breaker needs $n$ amplifiers and $n$ delay circuits; so, its reliability decreases when the integer $n$ increases. It is then necessary to choose $n$ small enough to obtain a reasonable reliability and a rival cost, and high enough to sufficiently approximate the danger curve.

In the US-patent 3,836,821 an other kind of a ground fault protective system is disclosed; it utilizes an operational amplifier, integrator and switching means for interrupting the flow of current in the power line when the amplified and integrated signal produced by the fault current reaches a defined threshold value. However for operating, the neutral conductor of the power line must be connected to ground and clearly identified all along the line. Moreover, the switching means contacts are normally closed and a coil must be energized to interrupt the flow of current, which is not safe if one component of the circuit fails. Finally, this system includes a pulser and a second transformer which decrease once more the reliability of the system.

The object of the present invention is to obviate these disadvantages. It is another object of the invention to enhance domestic power line breakers operating in a positive safety mode. These objects and other one are accomplished in accordance with the invention by the provision of a domestic power line breaker including a relay which contacts, in series with the both conductors of the power line between the load and the a.c. power supply, are open when its controlling coil is not energized, the input signal of the breaker being delivered by the secondary winding of a differential transformer, the primary winding of which is in series connection with the power line between said contacts and the a.c. supply.

The power line breaker comprises a current-to-voltage converter to which is applied the input signal, the output of which is connected to a low-pass filter in series connection with a rectifier which output is connected to a function generator the output signal of which presents a slope of voltage proportional to the peak-amplitude of the signal delivered by the rectifier and is applied to the first input of a comparator having a second input to which is applied a d.c. threshold voltage. The output signal of the comparator is applied to the input of an amplifier the output of which controls the state of the relay contacts.

A feed-back diode shunts the first input and the output of the comparator, in order to lock the relay contacts in open state if the breaker has controlled their opening. The circuits of the breaker are energized through a restrike switch which must be used in order to dislock the relay contacts and to allow their closing when the cause from which resulted their opening desappears.

Other goals, advantages and characteristics of the invention will appear more clearly as the invention becomes better understood in accordance with the detailed following description of an embodiment given non limitedly and to which one drawing is annexed.

Figure 1 is a schematic diagram of a breaker designed in accordance of the present invention, and

Figure 2 is a schematic diagram of the associated d.c. supply.

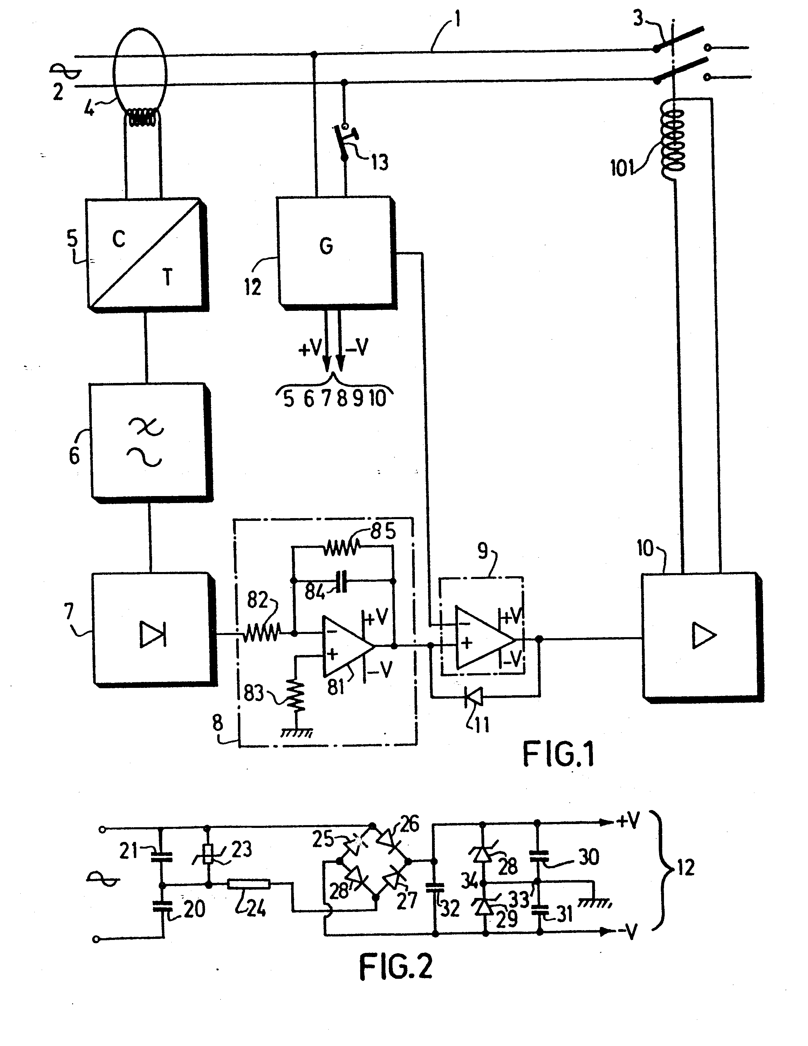

Referring now to the drawings with greater particularity, there is shown in figure 1 a domestic power line breaker designated in accordance with the present invention.

The power line 1 connects the a.c. power supply 2 for instance 220 volts 50 Hertz or 115 volts 60 Hertz, to a load which is not represented on the figure. The neutral conductor of the line has not to be defined for the operation of the breaker.

A relay 3 is connected in series in the line 1 between the a.c. supply and the load. The contacts of this relay 3 are normally open when the controlling coil 101 is not energized. This relay includes a set of contacts for each conductor of the line 1 in order to switch simultaneously the both conductors and so to achieve a complete safety for the user. The primary windings of a differential transformer 4 are connected in upstream part of the power line 1 in order to deliver at the secondary windings a signal when a differential current appears in the power line 1.

The intensity of the signal depends directly upon the intensity of the detected differential current, and the frequency of this signal is the same as that of the a.c. supply (i.e. 50 or 60 Hertz). This signal is applied first to a current-to-voltage converter 5 having a zero input impedance and a determined gain such as an operational amplifier. This voltage signal is then applied to a low-pass filter 6 which cut-off frequency is slightly higher than the frequency of the a.c. supply in order to eliminate transient and noise currents which are not defect currents. This filter 6 which may also be a differential amplifier is connected to a rectifier 7 in order to deliver a d.c. voltage signal in response to the differential current detected in the power line 1.

This d.c. voltage signal is then applied to a function generator 8 the output signal of which presents a slope of voltage proportional to the peak amplitude of the input d.c. voltage signal. This function generator 8 may be, for instance and preferably, a logarithmic integrator.

0116105

The divided a.c. voltage of the junction point of the two capacitors 20, 21 is applied through a series connected resistor 24 to a rectifier for instance to a full-wave bridge rectifier consisting of diodes 25-28, the output d.c. voltage of which is controlled by a pair of series connected Zener diodes 28-29 and stabilized by the capacitors 30-32 shunting respectively the Zener diodes 28-29, and by the capacitor 32 shunting the output of the rectifier. The junction point 33 of both capacitors 30, 31 is connected to the junction point 34 of the two Zener diodes 28-29 and constitutes the commun output to which is connected one end of the resistor 83 of the function generator 8.

The voltage of the commun conductor is the reference voltage for the circuits of the breaker and the source 12 delivers two symetrical voltages as regard to this reference voltage in order to supply the operating voltages of the operational amplifiers of the breaker and the control of the threshold voltage applied to the comparator 9. It is now understood why it is not necessary to identify the conductors of the power line 1 in order to determine the neutral one.

Operation of the breaker is now described. When there is no differential current in the power line 1, the restrike switch 13 being closed, the breaker is in surveillance state. The coil 101 is energized and the relay contacts 3 are closed, the load is normally supplied. Note that if the switch 13 is open, the relay contacts 3 are automatically open since the coil 101 is not energized, in order to insure the complete safety for the user.

When a differential current appears on the power line 1, for instance due to a leakage current between one of the conductors of the power line and the ground, a signal is generated at the secondary windings of the transformer 4 and is applied to the other circuits. The function generator 8 generates a voltage signal which slope is proportional to the detected differential current intensity. When the voltage of this signal reaches the d.c. threshold voltage applied to the comparator 9, the amplifier desenergizes the coil 101 which results in the opening of the relay contacts 3. The prominent

The output signal of this function generator 8 is then applied to the first input of a comparator 9 to the second input of which is applied a determined d.c. threshold voltage. Such a comparator is preferably also an operational amplifier.

The output of the comparator 9 is connected to an amplifier 10 controlling the state of the relay contacts 3, via the coil 101. For closing the relay contacts 3, the coil 101 must be energized in order to achieve the positive safety operation of the breaker.

A feed-back diode 11 shunting the first input and the output of the comparator 9 allows the lock of the relay contacts 3 in an open state when they have been opened by the breaker.

More in details, the function generator 8 includes an operational amplifier 81 having two inputs and one output. The negative input is connected, through a resistor 82, to the output of the rectifier 7 while its positive input is connected to a commun conductor through a resistor 83. A branch including a capacitor 84 and a resistor 85 in parallel is connected between the output of the amplifier 81 and the negative input thereof. The slope of the output voltage of this function generator 8 depends essentially upon the value of the resistor 85. In this embodiment the lapse of time between a detection of the differential current and the instant when the output voltage of the generator 8 reaches the threshold voltage applied to the comparator 9 is a logarithmic function of the intensity of the detected defect current.

A source 12 generates the required voltages to the operation of each part of the breaker and the d.c. threshold voltage applied to the comparator 9. This source 12 is connected to the power line 1 via a restrike switch 13. Referring to figure 2, this source 12 includes a voltage divider comprising two capacitors 20, 21 shunting its inputs. A varistor 23 shunts the capacitor 21 and prevents small disturbances, such as overvoltages.

part of this function generator 8 is to accelerate the opening of the relay contacts 3 if the detected differential current is high and to leave a delay for the opening if it is low and without danger, in order to avoid inopportune openings of these contacts. Thanks to this function generator 8 the response curve of the breaker may correspond to the known danger curve.

By adjusting the value of the resistors 82 and 85, each point of this response curve remains below the threshold above which nobody can release a hold.

The feed-back diode 11 applies to the first input of the comparator 9 the output voltage thereof, and so, locks the breaker in a safety state by forbidding the closing of the relay contacts 3 without that the user makes a positive act to demonstrate his will.

To close again the relay contacts 3, it is then necessary to open the restrike switch 13 and to close it again in order to restrike the breaker in order to put it in surveillance state.

So, it can be seen that the safety of this breaker is positive especially since all the surveillance circuits operate independently of the state of the relay contacts 3 which cannot be closed if the breaker is not in surveillance state.

While it has been described only the prefered embodiment of the invention, it should be evident that all modifications made by one of ordinary skill in the art in the same spirit would not depart from the scope of the present invention.

1 - Domestic power line breaker including a relay which contacts, in series with both conductors of the power line between the load and the a.c. power supply, are open when the control coil of said relay is not energized, the input signal of said breaker being delivered by the secondary windings of a differential transformer detecting any differential current in said line and being located on said power line between said contacts and said a.c. supply, said breaker being *characterized* in that it includes a current-to-voltage converter (5), a low-pass filter (6), a rectifier (7), a function generator (8), a comparator (9) and an amplifier (10), said input signal being applied to said current-to-voltage converter (5), the output of which is connected to said low-pass filter (6) in series connection with said rectifier (7) the output of which is connected to said function generator (8) generating a voltage signal which is applied to the first input of said comparator (9) having a second input to which is applied a determined d.c. threshold voltage, the output signal of said comparator (9) being applied to the input of said amplifier (10) controlling the state of said relay contacts (3) the circuits of said breaker being supplied by a d.c. voltage source (12) connected to said power line (1) between said relay (3) and said a.c. power supply (2) through a restrike switch (13).

2 - Breaker in accordance with claim 1 wherein a diode (11) shunts said first input and said output of said comparator (9), in order to lock the relay contacts (3) in open state if said breaker has controlled their opening.

3 - Breaker in accordance with anyone of claims 1 and 2 wherein said function generator (8) is a logarithmic integrator, the output signal of which presents a slope of voltage proportional to the peak amplitude of the d.c. voltage applied at its input.

4 - Breaker in accordance with claim 3 wherein said function generator (8) includes a differential amplifier (81) having two input and one output, the first input being connected through a first resistor (82) to the output of said rectifier (7) and the second input being connected to the commun conductor of said d.c. source (12) through a second resistor (83), a branch including a capacitor (84) and a third resistor (85) in parallel being connected between said output and said first input of said differential amplifier (81).

FIG.1

FIG.2

**European Patent Office**

**EUROPEAN SEARCH REPORT**

**0116105**

Application number

EP 83 10 1343

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 020 080 (TRIDENT EQUIPMENT LTD.) * Claims 1-4; abstract; figure 1 * | 1 | H 02 H 3/33 |
| Y | US-A-3 700 966 (P. MORROW) * Column 1, lines 31-55; column 2, lines 37-49; figure 1, positions 46, 48, 50, 52 * | 3,4 | |
| Y | F. BERGTOLD "Integrierte Schaltungen zum Steuern und Regeln", 1972, R. OLDENBOURG VERLAG, München, Wien * Pages 134-138; figures 18, 21 * | 3,4 | |
| A | US-A-4 024 436 (W.H. ADAMS) * Figure 1, position 45; figure 4 * | | TECHNICAL FIELDS SEARCHED (Int. Cl. 3) |
| D,A | US-A-3 836 821 (W.W. WAHLGREN et al.) * Column 2, lines 26-46; figure 1 * | | H 02 H 3/16 |
| | | | H 02 H 3/33 |

The present search report has been drawn up for all claims

| Place of search | Date of completion of the search | Examiner |
|---|---|---|
| BERLIN | 29-09-1983 | LEMMERICH J |